(19) Europäisches Patentamt
European Patent Office
Office européen des brevets

(11) **EP 3 226 272 A1**

(12) **EUROPEAN PATENT APPLICATION**
published in accordance with Art. 153(4) EPC

(43) Date of publication:
04.10.2017 Bulletin 2017/40

(51) Int Cl.:
*H01G 9/20* (2006.01)

(21) Application number: 16740153.8

(22) Date of filing: 19.01.2016

(86) International application number:
PCT/JP2016/051413

(87) International publication number:
WO 2016/117546 (28.07.2016 Gazette 2016/30)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 19.01.2015 JP 2015008158

(71) Applicant: Fujikura Ltd.
Tokyo 135-8512 (JP)

(72) Inventor: NISHIWAKI, Ko
Sakura-shi,
Chiba 285-8550 (JP)

(74) Representative: Hoffmann Eitle
Patent- und Rechtsanwälte PartmbB
Arabellastraße 30
81925 München (DE)

(54) **PHOTOELECTRIC CONVERSION ELEMENT**

(57) Disclosed is a photoelectric conversion element including at least one photoelectric conversion cell. The photoelectric conversion cell includes a pair of substrates, an oxide semiconductor layer provided on one of the pair of substrates, an electrolyte provided between the pair of substrates, and an annular sealing portion that joins the pair of substrates together. At least one of the pair of substrates includes an annular joining portion joined to the sealing portion and a non-joining portion which is present inside the joining portion and is not joined to the sealing portion. The joining portion includes a plurality of first linear portions spaced apart from each other, and a first connecting portion which connects two first linear portions among the plurality of first linear portions. In addition, the first connecting portion is formed by cutting off a whole corner portion on an opposite side from the non-joining portion in a first intersecting portion formed by extending and crossing the two first linear portions along a thickness direction of the substrates when the substrates are viewed in the thickness direction thereof.

Fig.3

**Description**

TECHNICAL FIELD

The present invention relates to a photoelectric conversion element.

BACKGROUND ART

A dye-sensitized solar cell element was developed by Gratzel et al. of Switzerland, and is a next-generation photoelectric conversion element attracting attention due to advantages such as high photoelectric conversion efficiency and low manufacturing cost.
In general, a photoelectric conversion element using a dye such as the dye-sensitized solar cell element includes at least one photoelectric conversion cell, and the photoelectric conversion cell includes a pair of substrates, an oxide semiconductor layer provided between the pair of substrates, an electrolyte provided between the pair of substrates, and an annular sealing portion that joins the pair of substrates together.
For example, a dye-sensitized solar cell described in Patent Document 1 below is known as such a photoelectric conversion element. In this dye-sensitized solar cell, when a thickness of a metal substrate used in a counter electrode which is one of the pair of substrates is set to 5 to 35 $\mu$m, the metal substrate can have flexibility. For this reason, even when stress is applied to the metal substrate due to a change in pressure inside a cell space formed by the pair of substrates and the annular sealing portion, the stress is absorbed at an interface between the counter electrode and the electrolyte. For this reason, the stress at the interface between the counter electrode and the sealing portion is relieved. As a result, lowering of sealing ability of the sealing portion with respect to the counter electrode is suppressed. Therefore, the dye-sensitized solar cell described in the Patent Document 1 below can have excellent durability.

CITATION LIST

PATENT DOCUMENT

Patent Document 1: JP 2010-198823 A

SUMMARY OF THE INVENTION

PROBLEM TO BE SOLVED BY THE INVENTION

However, the dye-sensitized solar cell described in Patent Document 1 has the following problems.
That is, the dye-sensitized solar cell described in Patent Document 1 has room for improvement in terms of improvement in durability.
The invention has been made in view of the above circumstances, and an object thereof is to provide a photoelectric conversion element capable of improving durability.

MEANS FOR SOLVING PROBLEM

The inventor has made extensive studies in order to solve the above-mentioned problems, and found that the above-mentioned problems can be solved by the following inventions.
That is, the present invention is a photoelectric conversion element including at least one photoelectric conversion cell, in which the photoelectric conversion cell includes a pair of substrates, an oxide semiconductor layer provided on one of the pair of substrates, an electrolyte provided between the pair of substrates, and an annular sealing portion that joins the pair of substrates together, at least one of the pair of substrates includes an annular joining portion joined to the sealing portion and a non-joining portion which is present inside the joining portion and is not joined to the sealing portion, the joining portion includes a plurality of first linear portions spaced apart from each other, and a first connecting portion which connects two first linear portions among the plurality of first linear portions, and the first connecting portion is formed by cutting off a whole corner portion on an opposite side from the non-joining portion in a first intersecting portion formed by extending and crossing the two first linear portions along a thickness direction of the substrates when the substrates are viewed in the thickness direction thereof.
In the photoelectric conversion element of the present invention, an internal pressure of the photoelectric conversion cell can change due to a change in ambient environmental temperature. In addition, when stress is repeatedly applied to the substrate, excessive stress may be applied to an interface between the substrate and the sealing portion. Here, in the photoelectric conversion cell of the photoelectric conversion element, in a case in which the first connecting portion is formed without cutting off the whole corner portion on the opposite side from the non-joining portion in the first intersecting portion formed by extending and crossing the two first linear portions along the thickness direction of the substrates when the substrates are viewed in the thickness direction thereof, stress concentrates on a corner portion of the first intersecting portion on an opposite side from the non-joining portion, and the corner portion is easily peeled off the sealing portion. In contrast, according to the present invention, in the photoelectric conversion cell, the first connecting portion is formed by cutting off the whole corner portion on the opposite side from the non-joining portion in the first intersecting portion formed by extending and crossing the two first linear portions along the thickness direction of the substrates when the substrates are viewed in the thickness direction thereof. For this reason, it is possible to disperse stress applied to the corner portion on an opposite side from the non-joining portion in the first connecting portion when compared to a case in which the corner portion on the opposite side from the non-joining portion in the intersecting portion is not cut off along the thickness direction of the substrates. For this reason, the first connecting portion of the substrates is hardly peeled off the sealing portion, and it is possible to improve durability of the photoelectric conversion element including the photoelectric conversion cell.

In the photoelectric conversion element, a shape of the corner portion on the opposite side from the non-joining portion in the first connecting portion is preferably a circular arc shape when the substrates are viewed in the thickness direction thereof, and a radius of curvature of the corner portion is preferably in a range of 0.05 to 6 mm.

When the radius of curvature of the corner portion is within the above range, durability of the photoelectric conversion element can be further improved since an effect that a stress concentration on the first connecting portion is relieved can be further increased compared to a case in which the radius of curvature of the corner portion is less than 0.05 mm. On the other hand, when the radius of curvature of the corner portion is within the above range, it is possible to further increase the effect that the stress concentration on the first connecting portion is relieved, and to more sufficiently ensure a width of the sealing portion necessary to maintain durability compared to a case in which the radius of curvature of the corner portion exceeds 6 mm.

In the photoelectric conversion element, a shape of the corner portion on the opposite side from the non-joining portion in the first connecting portion is preferably a linear shape when the substrates are viewed in the thickness direction thereof, and a length of the corner portion is preferably in a range of 0.05 to 4.0 mm.

When the length of the corner portion is within the above range, the effect that the stress concentration on the first connecting portion is relieved can be further increased compared to a case in which the length of the corner portion is less than 0.05 mm. On the other hand, when the length of the corner portion is within the above range, it is possible to further increase the effect that the stress concentration on the first connecting portion is relieved, and to more sufficiently ensure the width of the sealing portion necessary to maintain durability compared to a case in which the length of the corner portion exceeds 4.0 mm.

In the photoelectric conversion element, it is preferable that the oxide semiconductor layer include an inner portion and an annular outer portion which surrounds the inner portion, the outer portion include a plurality of second linear portions spaced apart from each other, and a second connecting portion which connects two second linear portions among the plurality of second linear portions, and the second connecting portion be formed by cutting off a corner portion on an opposite side from the inner portion in a second intersecting portion formed by extending and crossing the two second linear portions when the oxide semiconductor layer is viewed in a thickness direction thereof.

In this case, the second connecting portion of the oxide semiconductor layer is hardly peeled off the substrates compared to a case in which the second connecting portion is formed without cutting off the corner portion on the opposite side from the inner portion in the second intersecting portion formed by extending and crossing the two second linear portions when the oxide semiconductor layer is viewed in the thickness direction thereof, and it is possible to improve durability of the photoelectric conversion element including the photoelectric conversion cell.

In the photoelectric conversion element, it is preferable that a shape of the corner portion on the opposite side from the inner portion in the second connecting portion be a circular arc shape when the oxide semiconductor layer is viewed in the thickness direction thereof, and a radius of curvature of the corner portion be in a range of 0.1 to 5 mm.

In this case, an effect that a stress concentration on the second connecting portion is relieved can be further increased compared to a case in which the radius of curvature of the corner portion of the second connecting portion is less than 0.1 mm, and hence durability of the photoelectric conversion element can be further improved. In addition, when the radius of curvature of the corner portion of the second connecting portion is in the range of 0.1 to 5 mm, an power generation area can be further increased compared to a case in which the radius of curvature of the corner portion of the second connecting portion exceeds 5 mm, and it is possible to further improve a photoelectric conversion characteristic of the photoelectric conversion element.

In the photoelectric conversion element, it is preferable that a shape of the corner portion on the opposite side from the inner portion in the second connecting portion be a linear shape when the oxide semiconductor layer is viewed in the thickness direction thereof, and a length of the corner portion be in a range of 0.14 to 4.2 mm.

In this case, the effect that the stress concentration on the second connecting portion is relieved can be further increased compared to a case in which the length of the corner portion of the second connecting portion is less than 0.14 mm, and hence durability of the photoelectric conversion element can be further improved. In addition, when the length of the corner portion of the second connecting portion is in the range of 0.14 to 4.2 mm, an power generation area can be further increased compared to a case in which the length of the corner portion of the second connecting portion exceeds 4.2 mm, and it is possible to further improve the photoelectric conversion characteristic of the photoelectric conversion element.

In the photoelectric conversion element, the sealing portion preferably protrudes to the opposite side from the non-joining portion in the first connecting portion of the substrates when the sealing portion and the substrates are viewed in a thickness direction thereof.

In this case, a sealing width of the sealing portion can be sufficiently secured on the opposite side from the non-joining portion in the first connecting portion on which stress easily concentrates, and hence it is possible to more sufficiently improve durability of the photoelectric conversion element.

In the present invention, the "corner portion" refers to a boundary line between the first connecting portion and the corner portion.

In addition, in the present invention, the "outer portion" of the oxide semiconductor layer refers to a portion of up to 1 mm from a peripheral portion of the oxide semiconductor layer when the oxide semiconductor layer is viewed in the thickness direction thereof.

In addition, in the present invention, the thickness direction of the substrates refers to a direction perpendicular to a surface on the electrolyte side.

Further, in the present invention, the thickness direction of the oxide semiconductor layer refers to a direction perpendicular to an interface between the substrate and the oxide semiconductor layer.

In addition, in the present invention, the thickness direction of the sealing portion refers to a direction perpendicular to an interface between the substrate and the sealing portion.

EFFECT OF THE INVENTION

According to the present invention, a photoelectric conversion element capable of improving durability is provided.

BRIEF DESCRIPTION OF DRAWINGS

Fig. 1 is a plan view illustrating an embodiment of a photoelectric conversion element of the present invention;
Fig. 2 is a cross-sectional view taken along II-II line of Fig. 1;
Fig. 3 is a partially enlarged view of Fig. 1;
Fig. 4 is a cross-sectional view of the photoelectric conversion element of Fig. 1 cut along a plane passing through a sealing portion;
Fig. 5 is a partial cross-sectional view illustrating one of a pair of substrates of Fig. 1; and
Fig. 6 is a partial view illustrating a modified example of an oxide semiconductor layer of Fig. 4.

MODE(S) FOR CARRYING OUT THE INVENTION

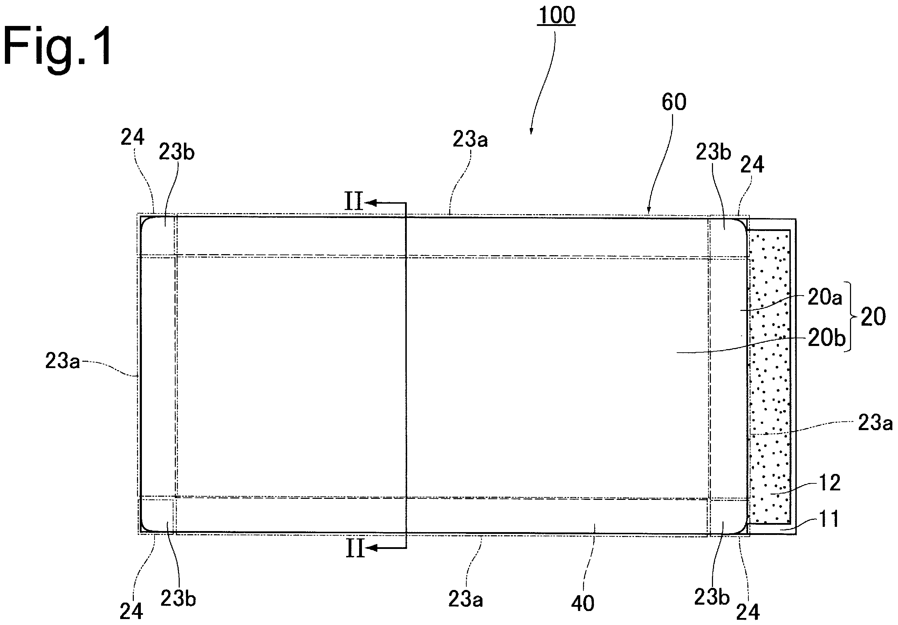

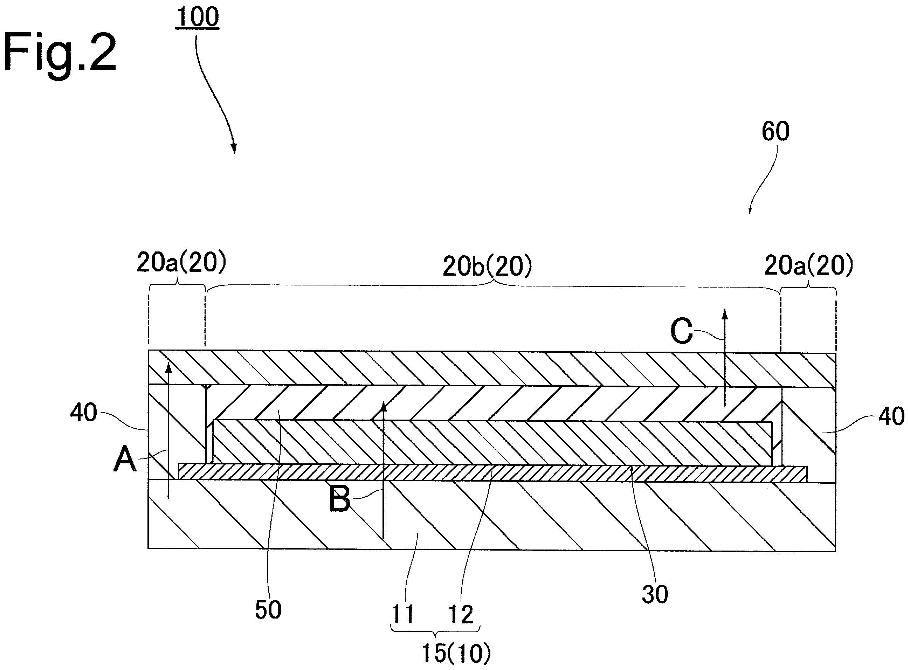

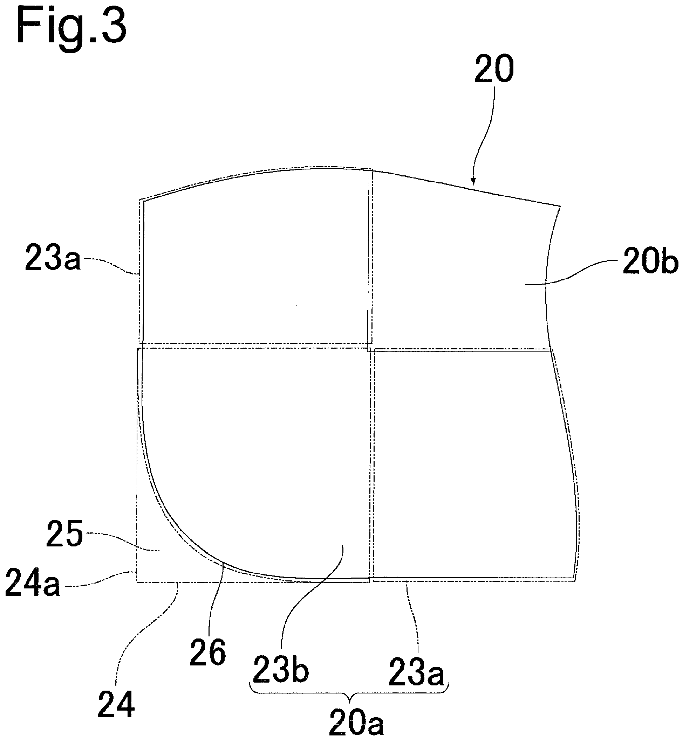

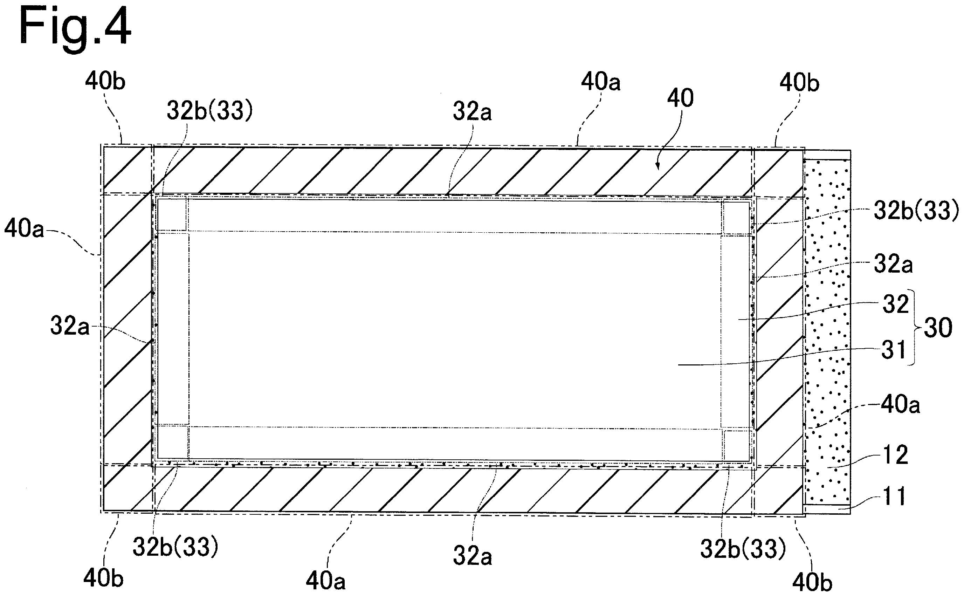

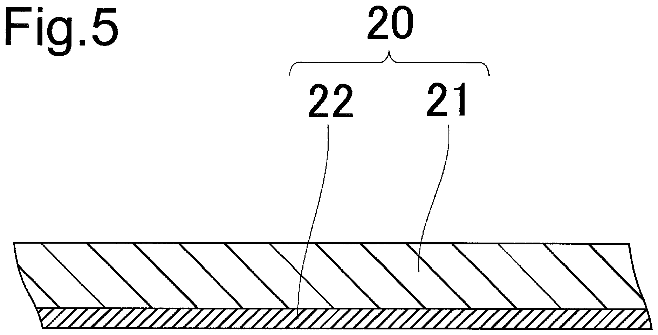

Hereinafter, an embodiment of the present invention will be described in detail with reference to Fig. 1 to Fig. 5. Fig. 1 is a plan view illustrating an embodiment of a photoelectric conversion element of the present invention. Fig. 2 is a cross-sectional view taken along II-II line of Fig. 1. Fig. 3 is a partially enlarged view of Fig. 1. Fig. 4 is a cross-sectional view of the photoelectric conversion element of Fig. 1 cut along a plane passing through a sealing portion. Fig. 5 is a partial cross-sectional view illustrating one of a pair of substrates of Fig. 1.

As illustrated in Fig. 1 and Fig. 2, a photoelectric conversion element 100 is constituted by one photoelectric conversion cell 60, and the photoelectric conversion cell 60 includes a first electrode substrate 10 serving as a substrate, a second electrode substrate 20 serving as a substrate facing the first electrode substrate 10, an oxide semiconductor layer 30 provided on the first electrode substrate 10, an electrolyte 50 provided between the first electrode substrate 10 and the second electrode substrate 20, and an annular sealing portion 40 that joins the first electrode substrate 10 and the second electrode substrate 20 together. The electrolyte 50 is filled in a cell space formed by the first electrode substrate 10, the second electrode substrate 20, and the sealing portion 40.

The first electrode substrate 10 is made of a transparent conductive substrate 15 constituted by a transparent substrate 11 and a transparent conductive film 12 serving as an electrode provided on the transparent substrate 11. Here, a peripheral portion of the transparent conductive film 12 is interposed between the sealing portion 40 and the transparent substrate 11 (see Fig. 2). In addition, part of the transparent conductive film 12 extends to an outside of the annular sealing portion 40, and the portion extending to the outside of this sealing portion 40 functions as a power extracting portion for extracting power (see Fig. 1).

The second electrode substrate 20 includes an annular (rectangular in the present embodiment) joining portion 20a joined to the sealing portion 40, and a non-joining portion 20b which is present inside the joining portion 20a and is not joined to the sealing portion 40. Here, the joining portion 20a includes a plurality of first linear portions 23a spaced apart from each other when the second electrode substrate 20 is viewed in a thickness direction C thereof, and a first connecting portion 23b connecting two first linear portions 23a among the plurality of first linear portions 23a. In addition, as illustrated in Fig. 3, the first connecting portion 23b is formed by cutting off a whole corner portion 25 on an opposite side from the non-joining portion 20b in a first intersecting portion 24 formed by extending and crossing the two first linear portions 23a along a thickness direction C of the second electrode substrate 20 when the second electrode substrate 20 is viewed in the thickness direction C thereof. In addition, as illustrated in Fig. 5, the second electrode substrate 20 includes a conductive substrate 21 and a catalyst layer 22 which is provided on the side of the conductive substrate 21 facing the transparent conductive substrate 15 and contributes to reduction of the electrolyte 50.

As illustrated in Fig. 4, the oxide semiconductor layer 30 is disposed inside the sealing portion 40. In other words, the sealing portion 40 is disposed to surround the oxide semiconductor layer 30. The sealing portion 40 and the oxide semiconductor layer 30 are separated from each other. In addition, a dye is adsorbed on the oxide semiconductor layer 30. The oxide semiconductor layer 30 has an inner portion 31 and an annular outer portion 32 that surrounds the inner portion 31 when the oxide semiconductor layer 30 is viewed in a thickness direction B thereof. As illustrated in Fig. 4, the outer portion 32 has a plurality of (four in Fig. 3) second linear portions 32a spaced apart from each other, and a second connecting portion 32b that connects two second linear portions 32a among the plurality of second linear portions 32a. Here, when the oxide semiconductor layer 30 is viewed in the thickness direction B thereof, the second connecting portion 32b of the outer portion 32 is constituted by a second intersecting portion 33 formed by extending and crossing the two second linear portions 32a.

As illustrated in Fig. 4, when the sealing portion 40 is viewed in a thickness direction A thereof, the sealing portion 40 has a plurality of (four in Fig. 4) third linear portions 40a provided along the outer portion 32 of the oxide semiconductor layer 30, and a third connecting portion 40b that connects two third linear portions 40a among the plurality of third linear portions 40a. In addition, the third connecting portion 40b of the sealing portion 40 is disposed to face the second connecting portion 32b of the outer portion 32 of the oxide semiconductor layer 30.

In addition, in the photoelectric conversion element 100, when the sealing portion 40 and the second electrode substrate 20 are viewed in the thickness direction C thereof, the sealing portion 40 protrudes to an opposite side from the non-joining portion 20b in the first connecting portion 23b of the second electrode substrate 20 (see Fig. 1).

In the photoelectric conversion element 100, an internal pressure of the photoelectric conversion cell 60 may change due to a change in ambient environmental temperature. In addition, when stress is repeatedly applied to the second electrode substrate 20, excessive stress may be applied to an interface between the second electrode substrate 20 and the sealing portion 40. Here, in the photoelectric conversion cell 60 of the photoelectric conversion element 100, in a case in which the first connecting portion 23b is formed without cutting off the whole corner portion 25 on the opposite side from the non-joining portion 20b in the first intersecting portion 24 formed by extending and crossing the two first linear portions 23a along the thickness direction C of the second electrode substrate 20 when the second electrode substrate 20 is viewed in the thickness direction C thereof, stress concentrates on a corner portion 24a of the first intersecting portion 24 on an opposite side from the non-joining portion 20b, and the corner portion 24a is easily peeled off the sealing portion 40. In contrast, according to the photoelectric conversion element 100, in the photoelectric conversion cell 60, the first connecting portion 23b is formed by cutting off the whole corner portion 25 on the opposite side from the non-joining portion 20b in the first intersecting portion 24 formed by extending and crossing the two first linear portions 23a along the thickness direction C of the second electrode substrate 20 when the second electrode substrate 20 is viewed in the thickness direction C thereof. For this reason, it is possible to disperse stress applied to the corner portion 26 on an opposite side from the non-joining portion 20b in the first connecting portion 23b compared to a case in which the corner portion 25 on the opposite side from the non-joining portion 20b in the first intersecting portion 24 is not cut off along the thickness direction C of the second electrode substrate 20. For this reason, the first connecting portion 23b of the second electrode substrate 20 is hardly peeled off the sealing portion 40, and it is possible to improve durability of the photoelectric conversion element 100 including the photoelectric conversion cell 60.

In addition, in the photoelectric conversion element 100, when the sealing portion 40 and the second electrode substrate 20 are viewed in the thickness direction C thereof, the sealing portion 40 protrudes to the opposite side from the non-joining portion 20b in the first connecting portion 23b of the second electrode substrate 20. For this reason, a sealing width of the sealing portion 40 can be sufficiently secured on the opposite side from the non-joining portion 20b in the first connecting portion 23b on which stress easily concentrates, and hence it is possible to more sufficiently improve durability of the photoelectric conversion element 100.

Next, a detailed description will be given of the first electrode substrate 10, the second electrode substrate 20, the oxide semiconductor layer 30, the sealing portion 40, the electrolyte 50, and the dye.

<First electrode substrate>

As described above, the first electrode substrate 10 is constituted by the transparent conductive substrate 15, and the transparent conductive substrate 15 is constituted by the transparent substrate 11 and the transparent conductive film 12 provided on the transparent substrate 11.

The material constituting the transparent substrate 11 may be any transparent material, for example, and examples of such a transparent material include an insulating material which is glass such as borosilicate glass, soda lime glass, glass which is made of soda lime and whose iron component is less than that of ordinary soda lime glass, and quartz glass, polyethylene terephthalate (PET), polyethylene naphthalate (PEN), polycarbonate (PC), polyethersulfone (PES) or the like. The thickness of the transparent substrate 11 is appropriately determined depending on the size of the photoelectric conversion element 100 and is not particularly limited, but it may be set into the range of from 50 to 40000 $\mu$m, for example.

Examples of the material constituting the transparent conductive film 12 include a conductive metal oxide such as indium-tin-oxide (ITO), tin oxide ($SnO_2$), and fluorine-doped-tin-oxide (FTO). The transparent conductive film 12 may be constituted by a single layer or a laminate consisting of a plurality of layers constituted by different conductive metal oxides. It is preferable that the transparent conductive film 12 is constituted by FTO since FTO exhibits high heat resistance and chemical resistance in a case in which the transparent conductive film 12 is constituted by a single layer. The thickness of the transparent conductive film 12 may be set into the range of from 0.01 to 2 $\mu$m, for example.

<Second electrode substrate>

As described above, the second electrode substrate 20 includes the conductive substrate 21 serving both as a substrate and a second electrode, and the conductive catalyst layer 22 which is provided on the side of the conductive substrate 21 facing the first electrode substrate 10 and contributes to reduction of the electrolyte 50.

For example, the conductive substrate 21 is made of a corrosion resistant metal material such as titanium, nickel, platinum, molybdenum, tungsten, aluminum, stainless steel or the like. Alternatively, the conductive substrate 21 may be configured as a stacked body in which a transparent conductive film made of a conductive oxide such as ITO, FTO or the like is formed as the second electrode on the above-described insulating transparent substrate 11 with the substrate and the second electrode divided. Here, when the conductive substrate 21 is configured as the stacked body in which the transparent conductive film is formed on the transparent substrate 11, the transparent conductive film is provided on the transparent substrate 11 at least in a portion inside the sealing portion 40 in the second electrode substrate 20. Here, the transparent conductive film may or may not be present between the transparent substrate 11 and the sealing portion 40 in the joining portion 20a. In addition, a thickness of the conductive substrate 21 is appropriately determined according to a size of the photoelectric conversion element 100, and is not particularly limited. However, for example, the thickness may be set to 0.005 to 4 mm.

The catalyst layer 22 is made of platinum, a carbon-based material, a conductive polymer or the like. Here, a carbon nanotube is preferably used as the carbon-based material. Incidentally, the second electrode substrate 20 may not have the catalyst layer 22 when the conductive substrate 21 has a catalytic function (for example, when the conductive substrate 21 has carbon or the like).

A shape of the corner portion 26 of the first connecting portion 23b on an opposite side from the non-joining portion 20b may be a linear shape or a circular arc shape as illustrated in Fig. 3.

In a case in which the shape of the corner portion 26 of the first connecting portion 23b on the opposite side from the non-joining portion 20b is the circular arc shape when the second electrode substrate 20 is viewed in the thickness direction C thereof, although a radius of curvature R1 of the corner portion 26 is not particularly limited, the radius of curvature R1 is preferably in a range of 0.05 to 6 mm, and more preferably in a range of 0.1 to 5 mm. In a case in which R1 is in the range of 0.05 to 6 mm, an effect that a stress concentration on the first connecting portion 23b is relieved can be further increased compared to a case in which R1 is less than 0.05 mm, and hence durability of the photoelectric conversion element 100 can be further improved. In addition, in a case in which R1 is in the range of 0.05 to 6 mm, it is possible to further increase the effect that the stress concentration on the first connecting portion 23b is relieved, and to more sufficiently secure the width of the sealing portion 40 necessary to maintain durability compared to a case in which R1 exceeds 6 mm.

In addition, in a case in which the shape of the corner portion 26 of the first connecting portion 23b on the opposite side from the non-joining portion 20b is the linear shape, although a length L1 thereof is not particularly limited, the length L1 is preferably in a range of 0.05 to 4.0 mm, and more preferably in a range of 0.1 to 3.0 mm. In this case, compared to a case in which L1 is less than 0.05 mm, the effect that the stress concentration on the first connecting portion 23b is relieved can be further increased, and hence durability of the photoelectric conversion element 100 can be further improved. In addition, in a case in which L1 is in the range of 0.05 to 4.0 mm, it is possible to further increase the effect that the stress concentration on the first connecting portion 23b is relieved, and to more sufficiently secure the width of the sealing portion 40 necessary to maintain durability compared to a case in which L1 exceeds 4.0 mm.

<Oxide semiconductor layer>

The oxide semiconductor layer 30 is constituted by oxide semiconductor particles. The oxide semiconductor particles are constituted by, for example, titanium oxide ($TiO_2$), silicon oxide ($SiO_2$), zinc oxide (ZnO), tungsten oxide ($WO_3$), niobium oxide ($Nb_2O_5$), strontium titanate ($SrTiO_3$), tin oxide ($SnO_2$), indium oxide ($In_3O_3$), zirconium oxide ($ZrO_2$), thallium oxide ($Ta_2O_5$), lanthanum oxide ($La_2O_3$), yttrium oxide ($Y_2O_3$), holmium oxide ($Ho_2O_3$), bismuth oxide ($Bi_2O_3$), cerium oxide ($CeO_2$), aluminum oxide ($Al_2O_3$), or two or more kinds of these.

A thickness of the inner portion 31 and a thickness of the outer portion 32 of the oxide semiconductor layer 30 is typically in a range of 2 to 40 $\mu$m, and preferably in a range of 10 to 30 $\mu$m.

<Sealing portion>

Examples of a material constituting the sealing portion 40 include a resin such as a thermoplastic resin containing a modified polyolefin resin, a vinyl alcohol polymer or the like, and an ultraviolet curable resin. Examples of the modified polyolefin resin include an ionomer, an ethylene-vinyl acetate anhydride copolymer, an ethylene-methacrylic acid copolymer and an ethylene-vinyl alcohol copolymer. These resins can be used alone or in combination of two or more types.

(Electrolyte)

The electrolyte 50 contains, for example, a redox couple such as iodide ion (iodine ion)/polyiodide ion and an organic solvent. It is possible to use acetonitrile, methoxy acetonitrile, methoxy propionitrile, propionitrile, ethylene carbonate, propylene carbonate, diethyl carbonate, $\gamma$-butyrolactone, valeronitrile, pivalonitrile, glutaronitrile, methacrylonitrile, isobutyronitrile, phenyl acetonitrile, acrylonitrile, succinonitrile, oxalonitrile, pentanenitrile, adiponitrile or the like as the organic solvent. Examples of the redox couple include a redox couple such as a zinc complex, an iron complex, and a cobalt complex in addition to a redox couple containing a halogen atom such as iodide ion/polyiodide ion (for example, $I^-/I_3^-$), bromide ion (bromine ion) /polybromide ion or the like. Incidentally, iodine ion/polyiodide ion can be formed by iodine ($I_2$) and a salt (an ionic liquid or a solid salt) containing iodide ($I^-$) as an anion. In a case of using the ionic liquid having iodide as an anion, only iodine may be added. In a case of using an organic solvent or an ionic liquid other than iodide as an anion, a salt containing iodide ($I^-$) as an anion such as LiI, tetrabutylammonium iodide or the like may be added. In addition, the electrolyte 50 may use an ionic liquid instead of the organic solvent. As the ionic liquid, for example, an ordinary temperature molten salt which is a known iodine salt, such as a pyridinium salt, an imidazolium salt, and a triazolium salt, and which is in a molten state at around room temperature is used. As such an ordinary temperature molten salt, for example, 1-hexyl-3-methylimidazolium iodide, 1-ethyl-3-propylimidazolium iodide, dimethylimidazolium iodide, 1-ethyl-3-methylimidazolium iodide, 1,2-dimethyl-3-propylimidazolium iodide, 1-butyl-3-methylimidazolium iodide, or 1-methyl-3-propylimidazolium iodide is preferably used.

In addition, the electrolyte 50 may use a mixture of the ionic liquid above and the organic solvent above instead of the organic solvent above.

In addition, it is possible to add an additive to the electrolyte 50. Examples of the additive include LiI, tetrabutylammonium iodide, 4-t-butylpyridine, guanidium thiocyanate, 1-methylbenzimidazole, and 1-butylbenzimidazole.

Moreover, as the electrolyte 50, a nanocomposite gel electrolyte which is a quasi-solid electrolyte obtained by kneading nanoparticles such as $SiO_2$, $TiO_2$, and carbon nanotubes with the electrolyte above into a gel-like form may be used, or an electrolyte gelled using an organic gelling agent such as polyvinylidene fluoride, a polyethylene oxide derivative, and an amino acid derivative may also be used.

Incidentally, it is preferable that the electrolyte 50 contain redox couples composed of iodide ion/polyiodide ion (for example, $I^-/I_3^-$), and the concentration of polyiodide ion be 0.006 mol/liter or less. In this case, since the concentration of polyiodide ion carrying electrons is low, it is possible to further reduce a leakage current. Therefore, since the open-circuit voltage can be further increased, it is possible to further improve the photoelectric conversion characteristic. Particularly, the concentration of polyiodide ion is preferably 0.005 mol/liter or less, more preferably in a range of 0 to $6 \times 10^{-6}$ mol/liter, even more preferably in a range of 0 to $6 \times 10^{-8}$ mol/liter. In this case, in a case where the photoelectric conversion element 100 is seen from the light incident side of the conductive substrate 15, it is possible to make the color of the electrolyte 50 visually less noticeable.

<Dye>

As the dye, for example, a photosensitizing dye such as a ruthenium complex having a ligand including a bipyridine structure, a terpyridine structure or the like, an organic dye such as porphyrin, eosin, rhodamine, or merocyanine; and an organic-inorganic composite dye such as a halogenated lead-based perovskite may be exemplified. As the halogenated lead-based perovskite, for example, $CH_3NH_3PbX_3$ (X = Cl, Br, I) is used. Here, in a case of using a photosensitizing dye as the dye, the photoelectric conversion element 100 is constituted by a dye-sensitized photoelectric conversion element, and the photoelectric conversion cell 50 is constituted by a dye-sensitized photoelectric conversion cell.

Among the above-mentioned dyes, a photosensitizing dye composed of the ruthenium complex having a ligand including a bipyridine structure or a terpyridine structure is preferred. In this case, it is possible to more improve the photoelectric conversion characteristic of the photoelectric conversion element 100.

Next, the method of manufacturing the photoelectric conversion element 100 will be described.

First, a first electrode substrate 10 constituted by a transparent conductive substrate 15 obtained by forming a transparent conductive film 12 on one transparent substrate 11 is prepared.

As the method of forming the transparent conductive film 12, a sputtering method, a vapor deposition method, a spray pyrolysis deposition method, a CVD method or the like is used.

Subsequently, the oxide semiconductor layer 30 is formed on the transparent conductive film 12. The oxide semiconductor layer 30 is formed by printing an oxide semiconductor layer forming paste that contains oxide semiconductor particles, and then firing the oxide semiconductor layer forming paste. At this time, when the oxide semiconductor layer 30 is viewed in the thickness direction B thereof, the second connecting portion 32b of the outer portion 32 is constituted by the second intersecting portion 33 formed by extending and crossing the two second linear portions 32a.

The oxide semiconductor layer forming paste contains a resin such as polyethylene glycol and a solvent such as terpineol in addition to the oxide semiconductor particles.

It is possible to use, for example, a screen printing method, a doctor blading method, or a bar coating method as the printing method of the oxide semiconductor layer forming paste.

The firing temperature varies depending on the kind of the oxide semiconductor particles but is typically from 350 to 600°C, and the firing time also varies depending on the kind of the oxide semiconductor particles but is typically from 1 to 5 hours.

In this manner, the working electrode is obtained.

Next, the dye is adsorbed on a surface of the oxide semiconductor layer 30 of the working electrode. For this, the dye may be adsorbed on the oxide semiconductor layer 30 by immersing the working electrode in a solution containing the dye, making the dye adsorb on the oxide semiconductor layer 30, then washing off an extra dye using a solvent component of the above solution, and performing drying. However, the dye may be adsorbed on the oxide semiconductor layer 30 by applying a solution containing a dye to the oxide semiconductor layer 30 and then performing drying.

Next, the electrolyte 50 is prepared.

Subsequently, the electrolyte 50 is disposed on the oxide semiconductor layer 30. For example, the electrolyte 50 can be disposed by a printing method such as screen printing or the like.

Next, an annular sealing portion forming body is prepared. The sealing portion forming body can be obtained, for example, by preparing a resin film for sealing and forming one quadrangular opening in the resin film for sealing.

Thereafter, this sealing portion forming body is bonded onto the first electrode substrate 10. At this time, bonding of the sealing portion forming body to the first electrode substrate 10 can be conducted, for example, by melting and heating the sealing portion forming body.

Subsequently, a second electrode substrate forming body for forming the second electrode substrate 20 is prepared. Then, the first intersecting portion formed by crossing the first linear portions 23a of the joining portion 20a joined to the sealing portion 40 is specified in the second electrode substrate forming body. Then, with respect to the specified first intersecting portion, the whole corner portion on the opposite side from the non-joining portion 20b is cut off along a thickness direction of the second electrode substrate forming body to form the first connecting portion 23b. In this way, the second electrode substrate 20 is obtained. Here, the first connecting portion 23b can be formed, for example, using a laser processing method or a wire processing method. When the first connecting portion 23b is formed using the laser processing method, for example, a pulse laser light source is used as a laser light source.

A wavelength of the laser light may be 1000 nm or more, preferably in a range of 1000 to 2000 nm, and more preferably in a range of 1000 to 1200 nm.

A pulse width of the laser light is not particularly limited. However, the pulse width is typically 150 ns or less, preferably 100 ns or less. However, the pulse width of the laser light is preferably 5 ns or more.

Irradiation energy per unit scanning distance of the laser light is preferably in a range of 0.01 to 0.3 J/mm, and more preferably in a range of 0.06 to 0.09 J/mm.

The number of times of cutting per place may be one or more. However, the number is preferably one in terms of production efficiency.

Subsequently, after the second electrode substrate is disposed to close an opening of the sealing portion forming body, the second electrode substrate 20 is bonded to the sealing portion forming body. At this time, when the sealing portion 40 and the second electrode substrate 20 are viewed in the thickness direction C thereof, the sealing portion 40 protrudes to the opposite side from the non-joining portion 20b in the first connecting portion 23b of the second electrode substrate 20. In addition, at this time, the sealing portion forming body may be bonded to the second electrode substrate 20 in advance, and the sealing portion forming body may be bonded to the sealing portion forming body on the first electrode substrate 10 side. Bonding of the second electrode substrate 20 to the sealing portion forming body is conducted under reduced pressure, for example. In this way, the photoelectric conversion element 100 constituted by the one photoelectric conversion cell 60 is obtained.

The present invention is not limited to the above embodiment. For example, although in the above embodiment the oxide semiconductor layer 30 is provided on the transparent conductive film 12 of the transparent conductive substrate 15, and the photoelectric conversion element 100 has a structure in which light is received from the transparent conductive substrate 15 side, the photoelectric conversion element may have a structure in which light is received from the second electrode substrate 20 side using an opaque material (for example, a metal substrate) as a base material on which the oxide semiconductor layer 30 is provided, and using a transparent material as a base material for forming the second electrode substrate 20, or may have a structure in which light is received from both surfaces.

In addition, although the sealing portion 40 and the oxide semiconductor layer 30 are separated from each other in the above embodiment, the sealing portion 40 and the oxide semiconductor layer 30 may come into contact with each other.

Further, although the third linear portion 40a of the sealing portion 40 is provided along the outer portion 32 of the oxide semiconductor layer 30 in the above embodiment, the third linear portion 40a of the sealing portion 40 may not necessarily be provided along the outer portion 32 of the oxide semiconductor layer 30.

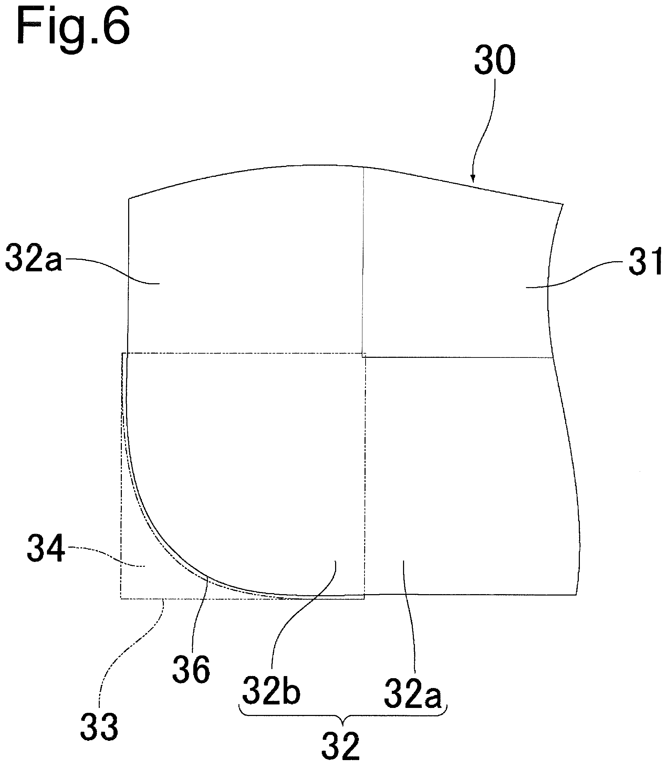

In addition, in the above embodiment, when the oxide semiconductor layer 30 is viewed in the thickness direction B thereof, the second connecting portion 32b of the outer portion 32 is constituted by the second intersecting portion 33 formed by extending and crossing the two second linear portions 32a. However, as illustrated in Fig. 6, the second connecting portion 32b may be formed by cutting off the corner portion 34 on the opposite side from the inner portion 31 in the quadrangular second intersecting portion 33 formed by extending and crossing the two second linear portions 32a. In this case, when compared to a case in which the second connecting portion 32b is formed without cutting off the corner portion 34 on the opposite side from the inner portion 31 in the second intersecting portion 33 formed by extending and crossing the two second linear portions 32a when the oxide semiconductor layer 30 is viewed in the thickness direction B thereof, the second connecting portion 32b of the oxide semiconductor layer 30 is hardly peeled off the first electrode substrate 10, and it is possible to further improve durability of the photoelectric conversion element 100 including the photoelectric conversion cell 60.

Here, as illustrated in Fig. 6, a shape of the corner portion 36 on the opposite side from the inner portion 31 in the second connecting portion 32b may be a circular arc shape or a linear shape. Here, the "corner portion" refers to a boundary line between the second connecting portion 32b and the corner portion 34.

In a case in which the shape of the corner portion 36 on the opposite side from the inner portion 31 in the second connecting portion 32b is the circular arc shape, although a radius of curvature R2 thereof is not particularly limited, the radius of curvature R2 is preferably in a range of 0.1 to 5 mm, and more preferably in a range of 0.5 to 3 mm. In a case in which R2 is in the range of 0.1 to 5 mm, an effect that a stress concentration on the second connecting portion 32b is relieved can be further increased when compared to a case in which R2 is less than 0.1 mm, and hence durability of the photoelectric conversion element 100 can be further improved. In addition, in a case in which R2 is in the range of 0.1 to 5 mm, it is possible to further increase a power generation area compared to a case in which R exceeds 5 mm, and it is possible to further improve a photoelectric conversion characteristic of the photoelectric conversion element 100.

In a case in which the shape of the corner portion 36 on the opposite side from the inner portion 31 in the second connecting portion 32b is the linear shape, although a length L2 thereof is not particularly limited, the length L2 is preferably in a range of 0.14 to 4.2 mm, and more preferably in a range of 0.3 to 3.0 mm. In this case, the effect that the stress concentration on the second connecting portion 32b is relieved can be further increased compared to a case in which L2 is less than 0.14 mm, and hence durability of the photoelectric conversion element 100 can be further improved. In addition, in a case in which L2 is in the range of 0.14 to 4.2 mm, it is possible to further increase a power generation area compared to a case in which L2 exceeds 4.2 mm, and it is possible to further improve the photoelectric conversion characteristic of the photoelectric conversion element 100.

In addition, in the above embodiment, the peripheral portion of the transparent conductive film 12 is interposed between the sealing portion 40 and the transparent substrate 11. However, the peripheral portion of the transparent conductive film 12 may not be interposed between the sealing portion 40 and the transparent substrate 11 except for the power extraction portion.

In addition, in the above embodiment, when the sealing portion 40 and the second electrode substrate 20 are viewed in the thickness direction C thereof, the sealing portion 40 protrudes to the opposite side from the non-joining portion 20b in the first connecting portion 23b of the second electrode substrate 20. However, the sealing portion 40 may not protrude to the opposite side from the non-joining portion 20b in the first connecting portion 23b of the second electrode substrate 20.

In addition, in the above embodiment, the photoelectric conversion element 100 is constituted by the one photoelectric conversion cell 60. However, the photoelectric conversion element may include a plurality of photoelectric conversion cells 60.

In addition, in the above embodiment, only the second electrode substrate 20 includes the first connecting portion 23b. However, only the first electrode substrate 10 may include the first connecting portion 23b, and both the first electrode substrate 10 and the second electrode substrate 20 may include the first connecting portion 23b.

In addition, in the above embodiment, the joining portion 20a includes only four first linear portions 23a. However, the joining portion 20a may include the plurality of first linear portions 23a, and may include two first linear portions 23a, three first linear portions 23a, or five or more first linear portions 23a. In addition, the joining portion 20a has the rectangular shape. However, the joining portion 20a may have an annular shape and may have a triangular shape, a pentagonal shape, a hexagonal shape, or a circular shape besides the rectangular shape.

Further, in the above embodiment, the first electrode substrate 10 and the second electrode substrate 20 are joined by the sealing portion 40. However, when a porous insulating layer impregnated with the electrolyte 50 is provided between the first electrode substrate 10 and the second electrode substrate 20, the first electrode substrate 10 and the second electrode substrate 20 may not be joined by the sealing portion 40. However, in this case, it is necessary that a base material serving as a substrate be provided on an opposite side of the first electrode substrate 10 with respect to the second electrode substrate 20, and the base material and the first electrode substrate 10 be joined by a sealing portion.

Examples

Hereinafter, the content of the present invention will be more specifically described with examples. However, the present invention is not limited to the following examples.

(Example 1)

First, a transparent conductive substrate obtained by forming a transparent conductive layer made of FTO and having a thickness of 1 $\mu$m on a transparent substrate having a thickness of 1 mm and made of glass was prepared as a first electrode substrate.

Subsequently, an oxide semiconductor layer forming paste containing titania was screen-printed using a printing plate having a rectangular screen of 2 cm $\times$ 4 cm on a transparent conductive film of the first electrode substrate, and then was fired at 500°C for an hour. At this time, a shape of a corner on an opposite side from an inner portion in a second connecting portion of an oxide semiconductor layer was set to a point. In this way, a working electrode having the oxide semiconductor layer which has dimensions of 2 cm $\times$ 4 cm was obtained.

Subsequently, the working electrode was immersed in a photosensitizing dye solution for a whole day and night and then was taken out and dried, and a photosensitizing dye was absorbed on the oxide semiconductor layer. The photosensitizing dye solution was prepared by dissolving a photosensitizing dye composed of Z907 in a mixed solvent in which acetonitrile and t-butanol were mixed at a volume ratio of 1 : 1 so that concentration thereof became 0.2 mM.

Subsequently, an electrolyte was applied onto the oxide semiconductor layer. A 3-methoxypropionitrile (MPN) solution containing 0.002 M of iodine and 0.6 M of 1,2-dimethyl-3-propylimidazolium iodide (DMPImI) was prepared as the electrolyte.

Subsequently, a sealing portion forming body for forming a sealing portion was prepared. The sealing portion forming body was obtained by preparing one sealing resin film made of Bynel 14164 (trade name, manufactured by DuPont) and having a size of 5.0 mm $\times$ 7.0 mm $\times$ 100 $\mu$m, and forming a quadrangular opening in the resin film for sealing. At this time, the opening was formed to have a size of 2.4 mm $\times$ 4.4 mm $\times$ 100 $\mu$m.

Then, after the sealing portion forming body was placed on the working electrode, the sealing portion forming body was bonded to the working electrode by being heated and melted.

Subsequently, a second electrode substrate forming body for forming a second electrode substrate was prepared. The second electrode substrate forming body was prepared by forming a catalyst layer made of platinum and having a thickness of 10 nm on a 5.0 mm $\times$ 7.0 mm $\times$ 0.05 mm titanium foil using a sputtering method. Then, a first intersecting portion formed by crossing first linear portions of a joining portion joined to the sealing portion was specified in the second electrode substrate forming body, and a first connecting portion was formed by cutting off a corner portion on an opposite side from a non-joining portion with respect to the specified first intersecting portion. The first connecting portion was formed by laser processing such that a shape of the corner portion on the opposite side from the non-joining portion was a circular arc shape having a radius of curvature R1 = 0.5 mm. At this time, a laser light source used for laser processing, a pulse width of the laser light, and irradiation energy per unit scanning distance were set as follows.

(1) Laser light source

Yb: Fiber laser (oscillation wavelength: 1090 nm, product name: MD-F 3000, manufactured by KEYENCE CORPORATION)

(2) Pulse width of laser light

50 ns

(3) Irradiation energy per unit scanning distance of laser light

0.06 J/mm

In this way, a counter electrode serving as the second electrode substrate was obtained.

On the other hand, another sealing portion forming body was prepared, and the sealing portion forming body was bonded to a surface of the counter electrode facing the working electrode in the same manner as described above.

Then, the sealing portion forming body bonded to the working electrode and the sealing portion forming body bonded to the counter electrode were opposed and superposed on each other. Then, under a reduced pressure, the sealing portion forming body was heated and melted while being pressed. Specifically, a pressure of a space in which the sealing portion forming body was heated and melted was set to 650 Pa. In this way, a sealing portion was formed between the working electrode and the counter electrode. At this time, when the sealing portion and the counter electrode were viewed in a thickness direction thereof, the sealing portion protruded to an opposite side from the non-joining portion in the first connecting portion.

In this way, a photoelectric conversion element composed of one photoelectric conversion cell was obtained.

(Example 2)

A photoelectric conversion element was obtained in the same manner as in Example 1 except that the first connecting portion was formed by laser processing such that the shape of the corner portion on the opposite side from the non-joining portion was a linear shape having a length $L1 = 1.0$ mm.

(Example 3)

A photoelectric conversion element was obtained in the same manner as in Example 1 except that the oxide semiconductor layer was formed such that a shape of the corner portion on the opposite side from the inner portion in the second connecting portion was a circular arc shape having a radius of curvature $R2 = 0.5$ mm by screen-printing the oxide semiconductor layer forming paste containing titania, and then firing the oxide semiconductor layer forming paste at 500°C for an hour. Incidentally, screen-printing was performed using a printing plate having a screen in which a shape of a rectangular corner portion of 2 cm $\times$ 4 cm (a portion corresponding to the corner portion of the second connecting portion) is a circular arc shape having a radius of curvature $R2 = 0.5$ mm.

(Example 4)

A photoelectric conversion element was obtained in the same manner as in Example 1 except that the oxide semiconductor layer was formed such that the shape of the corner portion on the opposite side from the inner portion in the second connecting portion was a linear shape having a length $L2 = 0.71$ mm by screen-printing the oxide semiconductor layer forming paste containing titania, and then firing the oxide semiconductor layer forming paste at 500°C for an hour. Incidentally, screen-printing was performed using a printing plate having a screen in which a shape of a rectangular corner portion of 2 cm $\times$ 4 cm (a portion corresponding to the corner portion of the second connecting portion) was a linear shape having a length $L2 = 0.71$ mm.

(Examples 5 to 8)

A photoelectric conversion element was obtained in the same manner as in Example 3 except that the oxide semiconductor layer was formed such that the shape of the corner portion on the opposite side from the inner portion in the second connecting portion was a circular arc shape having a radius of curvature R1 shown in Table 1 by screen-printing the oxide semiconductor layer forming paste containing titania, and then firing the oxide semiconductor layer forming paste at 500°C for an hour. Incidentally, screen-printing was performed using a printing plate having a screen in which a shape of a rectangular corner portion of 2 cm $\times$ 4 cm (a portion corresponding to the corner portion of the second connecting portion) was a circular arc shape having a radius of curvature R1 shown in Table 1.

(Examples 9 to 12)

A photoelectric conversion element was obtained in the same manner as in Example 3 except that the first connecting portion was formed by laser processing such that the shape of the corner portion on the opposite side from the non-joining portion was a linear shape having a length L1 shown in Table 1.

(Comparative Example 1)

A photoelectric conversion element was obtained in the same manner as in Example 1 except that the second electrode substrate forming body itself was used as the second electrode substrate without laser-processing the second electrode substrate forming body, and the shape of the corner portion on the opposite side from the non-joining portion in the first connecting portion was set to a point.

<Evaluation of durability>

Photoelectric conversion efficiency $\eta 0$ was measured for the photoelectric conversion elements obtained in Examples 1 to 12 and Comparative Example 1. Subsequently, the photoelectric conversion elements were subjected to a thermal cycle test. In the thermal cycle test, a cycle in which a temperature around the photoelectric conversion element is raised from -40°C to 90°C, and then held at 90°C for ten minutes, and then lowered from 90°C to -40°C, and held at -40°C for ten minutes was set to one cycle, and this cycle was performed 200 times. At this time, both a temperature raising rate and a temperature lowering rate were set to 10°C/min. Then, after the thermal cycle test, photoelectric conversion efficiency $\eta 1$ was measured again for the photoelectric conversion elements. Then, a reduction rate of photoelectric conversion efficiency was calculated based on the following formula.

$$\text{Reduction rate of photoelectric conversion efficiency} = 100 \times (\eta 0 - \eta 1)/\eta 0$$

Results are shown in Table 1. Incidentally, in Table 1, when the reduction rate of the photoelectric conversion efficiency was 5% or less, durability was considered as being particularly sufficiently improved and indicated by "⊙". Further, when the reduction rate of the photoelectric conversion efficiency was more than 5% and 10% or less, durability was considered as being sufficiently improved and indicated by "O". Further, when the reduction rate of the photoelectric conversion efficiency exceeded 10%, durability was considered as being insufficiently improved and indicated by "×".

[Table 1]

| | Second electrode substrate | | Oxide semiconductor layer | | Durability |
|---|---|---|---|---|---|
| | Shape of corner portion of first connecting portion | R1 or L1 (mm) | Shape of corner portion of second connecting portion | R2 or L2 (mm) | |
| Example 1 | Circular arc shape | R1 = 0.5 | Point | - | O |
| Example 2 | Linear shape | L1 = 1.0 | Point | - | O |
| Example 3 | Circular arc shape | R1 = 0.5 | Circular arc shape | R2 = 0.5 | ⊙ |
| Example 4 | Circular arc shape | R1 = 0.5 | Linear shape | L2 = 0.71 | ⊙ |
| Example 5 | Circular arc shape | R1 = 0.1 | Circular arc shape | R2 = 0.5 | ⊙ |
| Example 6 | Circular arc shape | R1 = 5.0 | Circular arc shape | R2 = 0.5 | ⊙ |
| Example 7 | Circular arc shape | R1 = 0.05 | Circular arc shape | R2 = 0.5 | O |
| Example 8 | Circular arc shape | R1 = 6.0 | Circular arc shape | R2 = 0.5 | O |
| Example 9 | Linear shape | L1 = 0.1 | Circular arc shape | R2 = 0.5 | ⊙ |

(continued)

| | Second electrode substrate | | Oxide semiconductor layer | | Durability |
|---|---|---|---|---|---|
| | Shape of corner portion of first connecting portion | R1 or L1 (mm) | Shape of corner portion of second connecting portion | R2 or L2 (mm) | |
| Example 10 | Linear shape | L1 = 3.0 | Circular arc shape | R2 = 0.5 | ⊙ |
| Example 11 | Linear shape | L1 = 0.05 | Circular arc shape | R2 = 0.5 | ○ |
| Example 12 | Linear shape | L1 = 4.0 | Circular arc shape | R2 = 0.5 | ○ |
| Comparative Example 1 | Point | - | Point | - | × |

From the results shown in Table 1, it was found that the photoelectric conversion elements of Examples 1 to 12 can improve durability compared to the photoelectric conversion element of Comparative Example 1.

From the above, it was confirmed that according to the photoelectric conversion element of the present invention, durability can be improved.

EXPLANATIONS OF REFERRENCE NUMERALS

10... first electrode substrate (substrate)
20... second electrode substrate (substrate)
20a... joining portion
20b... non-joining portion
23a... first linear portion
23b... first connecting portion
24... first intersecting portion
25... corner portion
26... corner portion on opposite side from non-joining portion in first connecting portion
30... oxide semiconductor layer
31... inner portion
32... outer portion
32a... second linear portion
32b... second connecting portion
33... second intersecting portion
34... corner portion
40... sealing portion
50... electrolyte
60... photoelectric conversion cell
100... photoelectric conversion element
A... thickness direction of sealing portion
B... thickness direction of oxide semiconductor layer
C... thickness direction of second electrode substrate (substrate)

## Claims

1. A photoelectric conversion element comprising at least one photoelectric conversion cell,
   wherein the photoelectric conversion cell includes
   a pair of substrates,
   an oxide semiconductor layer provided on one of the pair of substrates,
   an electrolyte provided between the pair of substrates, and
   an annular sealing portion that joins the pair of substrates together,

at least one of the pair of substrates includes an annular joining portion joined to the sealing portion and a non-joining portion which is present inside the joining portion and is not joined to the sealing portion, the joining portion includes a plurality of first linear portions spaced apart from each other, and a first connecting portion which connects two first linear portions among the plurality of first linear portions, and the first connecting portion is formed by cutting off a whole corner portion on an opposite side from the non-joining portion in a first intersecting portion formed by extending and crossing the two first linear portions along a thickness direction of the substrates when the substrates are viewed in the thickness direction thereof.

2. The photoelectric conversion element according to claim 1, wherein a shape of the corner portion on the opposite side from the non-joining portion in the first intersecting portion is a circular arc shape when the substrates are viewed in the thickness direction thereof, and a radius of curvature of the corner portion is in a range of 0.05 to 6 mm.

3. The photoelectric conversion element according to claim 1, wherein a shape of the corner portion on the opposite side from the non-joining portion in the first intersecting portion is a linear shape when the substrates are viewed in the thickness direction thereof, and a length of the corner portion is in a range of 0.05 to 4.0 mm.

4. The photoelectric conversion element according to any one of claims 1 to 3, wherein the oxide semiconductor layer includes an inner portion and an annular outer portion which surrounds the inner portion, the outer portion includes a plurality of second linear portions spaced apart from each other, and a second connecting portion which connects two second linear portions among the plurality of second linear portions, and the second connecting portion is formed by cutting off a corner portion on an opposite side from the inner portion in a second intersecting portion formed by extending and crossing the two second linear portions when the oxide semiconductor layer is viewed in a thickness direction thereof.

5. The photoelectric conversion element according to claim 4, wherein a shape of the corner portion on the opposite side from the inner portion in the second intersecting portion is a circular arc shape when the oxide semiconductor layer is viewed in the thickness direction thereof, and a radius of curvature of the corner portion is in a range of 0.1 to 5 mm.

6. The photoelectric conversion element according to claim 4, wherein a shape of the corner portion on the opposite side from the inner portion in the second intersecting portion is a linear shape when the oxide semiconductor layer is viewed in the thickness direction thereof, and a length of the corner portion is in a range of 0.14 to 4.2 mm.

7. The photoelectric conversion element according to any one of claims 1 to 6, wherein the sealing portion protrudes to the opposite side from the non-joining portion in the first connecting portion of the substrates when the sealing portion and the substrates are viewed in a thickness direction thereof.

# Fig.1

100

60

20a ⎫
20b ⎬ 20
  ⎭

23a

12

11

23b 24

23b 24

40

23a

23a

II

II

24 23b

24 23b

23a

15

# Fig.2

EP 3 226 272 A1

# Fig.3

Fig.4

EP 3 226 272 A1

Fig.5

20

22    21

# Fig.6

32a

30

31

34

36

33

32b

32a

32

## INTERNATIONAL SEARCH REPORT

| International application No. |
|---|
| PCT/JP2016/051413 |

**A. CLASSIFICATION OF SUBJECT MATTER**
*H01G9/20*(2006.01)i

According to International Patent Classification (IPC) or to both national classification and IPC

**B. FIELDS SEARCHED**

Minimum documentation searched (classification system followed by classification symbols)
H01G9/20, H01M14/00, H01L31/04, H01L51/44

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-258121 A (Sekisui Jushi Corp.), 04 October 2007 (04.10.2007), (Family: none) | 1-7 |
| A | JP 2012-113946 A (Sony Corp.), 14 June 2012 (14.06.2012), & WO 2012/070338 A1 | 1-7 |
| A | WO 2011/013423 A1 (Fujikura Ltd.), 03 February 2011 (03.02.2011), & JP 2014-63565 A       & JP 5241912 B2 & JP 4504456 B1          & US 2011/0223704 A1 & EP 2461419 A1          & CN 102084536 A & AU 2010276983 A        & KR 10-2011-0037938 A & TW 201115811 A | 1-7 |

☒ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 April 2016 (04.04.16) | 12 April 2016 (12.04.16) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2016/051413

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2013/115101 A1  (Hitachi Chemical Co., Ltd.), 08 August 2013 (08.08.2013), & JP 2013-157161 A        & CN 104081877 A & TW 201343592 A | 1-7 |

Form PCT/ISA/210 (continuation of second sheet) (January 2015)

**REFERENCES CITED IN THE DESCRIPTION**

**Patent documents cited in the description**

- JP 2010198823 A